# EUROPÄISCHE PATENTANMELDUNG

(11) **EP 4 442 997 A1**
(43) Veröffentlichungstag der Anmeldung: **09.10.2024**
(21) Anmeldenummer: 24162583.9
(22) Anmeldetag: 11.03.2024
(51) Int. Cl.: F03D 17/00, G01M 1/00, F03D 1/00, G01M 13/00, G01M 7/02, G01M 13/045, G01M 15/12

(54) **VERFAHREN UND VORRICHTUNG ZUR ÜBERWACHUNG EINES MASCHINENZUSTANDS EINER MASCHINENANLAGE, INSBESONDERE EINER WINDKRAFTANLAGE**

(30) Priorität: 03.04.2023 DE 102023108445
(71) Anmelder: Bachmann GmbH, 6800 Feldkirch (AT)
(72) Erfinder: Schulz, Michael, 07407 Rudolstadt (DE)
(74) Vertreter: v. Bezold & Partner Patentanwälte - PartG mbB

(57) **Zusammenfassung**

Ein Verfahren zur Überwachung eines Maschinenzustands einer Maschinenanlage, insbesondere einer Windkraftanlage, umfasst die Schritte Bereitstellung einer Zeitreihe von gemessenen Eigenschwingungsspektren der Maschinenanlage, Erfassung eines Deformationsparameters in mindestens einem Überwachungszeitintervall, wobei der Deformationsparameter für eine Abweichung der gemessenen Eigenschwingungsspektren von einem Referenz-Eigenschwingungsspektrum von mindestens einer Referenz-Maschinenanlage charakteristisch ist, Erfassung eines Rauschparameters zu dem mindestens einen Überwachungszeitintervall, wobei der Rauschparameter für ein Rauschen der gemessenen Eigenschwingungsspektren charakteristisch ist, und Ermittlung des Maschinenzustands aus dem Deformationsparameter und dem Rauschparameter. Es wird auch eine Überwachungsvorrichtung zur Überwachung eines Maschinenzustands einer Maschinenanlage, insbesondere einer Windkraftanlage, beschrieben.

## Beschreibung

Die Erfindung betrifft ein Verfahren und eine Überwachungsvorrichtung zur Überwachung eines Maschinenzustands einer Maschinenanlage, insbesondere einer Windkraftanlage, eines Fahrzeugs oder eines Bauwerks, auf der Grundlage von gemessenen Schwingungsdaten der Maschinenanlage. Anwendungen der Erfindung sind insbesondere bei der Überwachung und Erkennung von gestörten Betriebszuständen von Windkraftanlagen oder anderen Maschinenanlagen gegeben.

Es ist allgemein bekannt, den Zustand von Maschinenanlagen mittels Schwingungsmessungen zu erfassen (siehe z. B. DE 103 00 947 A1 oder DE 10 2018 119 679 A1). Bei einer Maschinenanlage, insbesondere einer Windkraftanlage, treten Maschinenbetriebsschwingungen und Strukturschwingungen auf. Maschinenbetriebsschwingungen werden resonant durch periodisch bewegte, insbesondere rotierende, Bauteile der Maschinenanlage angeregt. Der Frequenzbereich der Maschinenbetriebsschwingungen (typischerweise im Hz- bis kHz-Bereich) wird durch die Arbeitsfrequenzen der Maschinenanlage und deren höhere Harmonische bestimmt. Die Strukturschwingungen sind die Eigenfrequenzen (oder: Eigenschwingungen) der Maschinenanlage, die alle resonanten Schwingungen außer den Schwingungen durch die dynamische Anregung beim Maschinenbetrieb umfassen und typischerweise unterhalb der Arbeitsfrequenzen der Maschinenanlage im Bereich von mHz bis kHz liegen. Beispielsweise fallen die Eigenschwingungen der Turmbiegungen einer Windkraftanlage in den Bereich von 0.1 Hz bis 10 Hz und Torsionseigenschwingungen einer Schiffsantriebswelle in den Bereich von 1 Hz bis 100 Hz.

Eine Windkraftanlage umfasst typischerweise einen Turm mit einer Gondel, die einen Rotor trägt und einen Generator zur Umwandlung mechanischer Rotationsenergie des Rotors in elektrische Energie aufnimmt. Langsame Strukturschwingungen einer Windkraftanlage umfassen z. B. Turmbiegeschwingungen, die analog zu den zwei mechanischen Biegeschwingungen eines Stabes auftreten, und Gondelschwingungen, die insbesondere Nickschwingungen, Rollschwingungen seitlich um die Rotorachse und Drehschwingungen umfassen, von denen neben den Grundschwingungen auch die ersten angeregten Eigenschwingungen messbar sind. Strukturschwingungen werden durch alle an der Windkraftanlage auftretenden Krafteinwirkungen angeregt, so dass stochastische Krafteinwirkungen (stochastische Anregungen), wie z. B. die Windlast am Turm, zufällige Resonanzkurven erzeugen, die durch zufällige Fluktuationen von Resonanzen unter der Einhüllenden gekennzeichnet sind und deren mittlere Amplituden als Funktion der Frequenz in der Regel Breit-Wigner-Kurven (Lorentz-Kurven) sind, wobei die aktuellen Realisierungen starken zufälligen lokalen Schwankungen unterworfen sind.

Mechanische Veränderungen an der Struktur einer Maschinenanlage wirken sich auf die Strukturschwingungen aus, indem sich insbesondere die mittleren Amplituden von Eigenfrequenzen verändern und/oder das Spektrum der Strukturschwingungen deformiert wird. Beispielsweise kann ein Bolzen zur Befestigung der Gondel am Turm einer Windkraftanlage reißen, wodurch die Gondelschwingungen verändert werden. Ein Wachstum eines Risses wirkt sich als eine zeitabhängige Deformation des Spektrums der Strukturschwingungen aus.

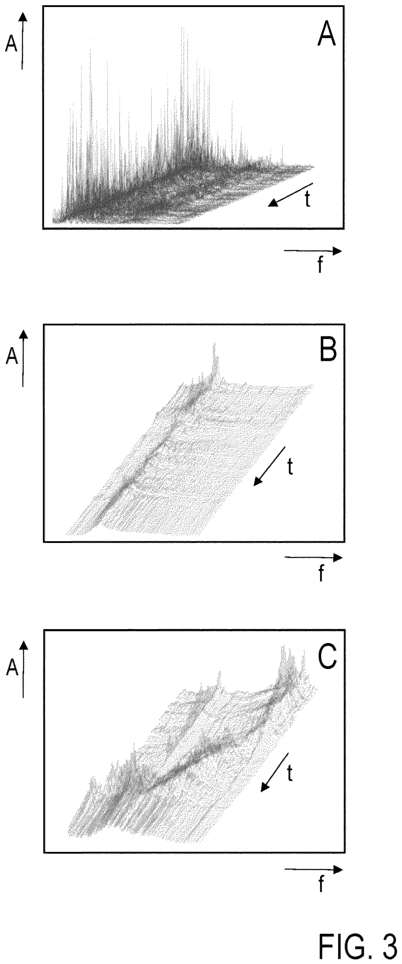

Es besteht daher ein Interesse an einer Erfassung der Strukturschwingungen, um Veränderungen an der Struktur einer Maschinenanlage frühzeitig zu erkennen und ggf. rechtzeitig Wartungs- oder Reparaturmaßnahmen durchführen zu können. Es ist zwar bekannt, bei einfachen Bauwerken, wie z. B. bei Antennenmasten, Strukturschwingungen zu analysieren, wobei jedoch zusätzlich gemessene Umweltdaten berücksichtigt werden müssen (siehe DE 10 2018 119 679 A1). Komplexe Maschinenanlagen, wie z. B. Windkraftanlagen, zeichnen sich jedoch durch stark verrauschte Spektren der Strukturschwingungen aus, die noch dazu durch systematische, aber drehzahlabhängige Anregungen der Maschinendynamik überlagert sind, wie beispielhaft in Figur 3A erkennbar ist.

Derartige stark verrauschte Spektren können mit herkömmlichen Methoden nur mit stark beschränkter Zuverlässigkeit, beschränkter Aussagekraft, mit einer Beschränkung auf besonders ausgeprägte Veränderungen und/oder unter Anwendung von zusätzlichem Statistik-Fachwissen ausgewertet werden, so dass ein Wartungs- oder Reparaturbedarf nicht oder nicht rechtzeitig erkannt wird. Die beschränkte Aussagekraft bedeutet z. B. dass eine Aussage über den Schadenstyp oder wenigstens die Schadensursache (Materialalterung, Bolzenbrüche, oder dergleichen) weitgehend ausgeschlossen ist. Ein weiteres Problem bei herkömmlichen Methoden ergibt sich daraus, dass jedes Spektrum nur eine Kurzzeitmessung mit relativ konstanten Umgebungsparametern umfasst und langfristige Veränderungen an einer Maschinenanlage nur beschränkt erkannt werden können.

Die genannten Probleme treten nicht nur bei der Überwachung von Windkraftanlagen, sondern auch bei anderen Maschinenanlagen auf, wie z. B. bei Wasserfahrzeugen oder Brücken.

Die Aufgabe der Erfindung ist es, ein verbessertes Verfahren und eine verbesserte Überwachungsvorrichtung zur Überwachung eines Maschinenzustands einer Maschinenanlage, wie z. B. einer Windkraftanlage, auf der Grundlage von gemessenen Schwingungsdaten der Maschinenanlage bereitzustellen, mit denen Beschränkungen herkömmlicher Techniken vermieden werden. Das Überwachungsverfahren und die Überwachungsvorrichtung sollen sich insbesondere durch eine erhöhte Zuverlässigkeit, eine verbesserte Empfindlichkeit und/oder vergrößerte Aussagekraft auszeichnen, eine vereinfachte Ausgabe von Überwachungsergebnissen ermöglichen und/oder neue oder erweiterte Anwendungen der schwingungsbasierten Überwachung ermöglichen.

Diese Aufgabe wird durch ein Verfahren und/oder eine Überwachungsvorrichtung zur Überwachung eines Maschinenzustands einer Maschinenanlage gelöst, welche die Merkmale der unabhängigen Ansprüche aufweisen. Bevorzugte Ausführungsformen und Anwendungen der Erfindung ergeben sich aus den abhängigen Ansprüchen.

Gemäß einem ersten allgemeinen Gesichtspunkt der Erfindung wird die obige Aufgabe durch ein Verfahren zur Überwachung eines Maschinenzustands einer Maschinenanlage, insbesondere einer Windkraftanlage, mit den Schritten gelöst, die eine Bereitstellung einer Zeitreihe von gemessenen Eigenschwingungsspektren der Maschinenanlage, eine Erfassung eines Deformationsparameters in mindestens einem Überwachungszeitintervall, wobei der Deformationsparameter für eine Abweichung der gemessenen Eigenschwingungsspektren von einem Referenz-Eigenschwingungsspektrum von mindestens einer Referenz-Maschinenanlage charakteristisch ist, eine Erfassung eines Rauschparameters zu dem mindestens einen Überwachungszeitintervall, wobei der Rauschparameter für ein Rauschen der gemessenen Eigenschwingungsspektren charakteristisch ist, und eine Ermittlung des Maschinenzustands aus dem Deformationsparameter und dem Rauschparameter umfassen.

Gemäß einem zweiten allgemeinen Gesichtspunkt der Erfindung wird die obige Aufgabe durch eine Überwachungsvorrichtung gelöst, die zur Überwachung eines Maschinenzustands einer Maschinenanlage, insbesondere einer Windkraftanlage, eingerichtet ist und eine Messeinrichtung, die zur Bereitstellung einer Zeitreihe von gemessenen Eigenschwingungsspektren der Maschinenanlage eingerichtet ist, eine Analyseeinrichtung, die zur Erfassung eines Deformationsparameters, der für eine Abweichung der gemessenen Eigenschwingungsspektren von mindestens einem Referenz-Eigenschwingungsspektrum mindestens einer Referenz-Maschinenanlage charakteristisch ist, in mindestens einem Überwachungszeitintervall und zur Erfassung eines Rauschparameters, der für ein Rauschen der gemessenen Eigenschwingungsspektren charakteristisch ist, in dem mindestens einen Überwachungszeitintervall eingerichtet ist, und eine Bewertungseinrichtung umfasst, die zur Ermittlung des Maschinenzustands aus dem Deformationsparameter und dem Rauschparameter eingerichtet ist. Vorzugsweise ist die Überwachungsvorrichtung oder eine ihrer Ausführungsformen zur Durchführung des Verfahrens gemäß dem ersten allgemeinen Gesichtspunkt der Erfindung oder einer seiner Ausführungsformen eingerichtet.

Gemäß bevorzugten Ausführungsformen der Erfindung kann die Überwachungsvorrichtung speicher-programmierbare Steuereinheiten, programmierbare logische Controller, und/oder mindestens eine FPGA-(Field programmable gated array)-Einheit umfassen, mit denen die Analyseeinrichtung und die Bewertungseinrichtung implementiert sind.

Weitere unabhängige Gegenstände der Erfindung sind eine Vorrichtung zur Datenverarbeitung, umfassend eine Computereinrichtung, die zur Ausführung des Verfahrens gemäß dem ersten allgemeinen Gesichtspunkt der Erfindung oder einer seiner Ausführungsformen, insbesondere der Erfassung des Deformationsparameters und des Rauschparameters und der Ermittlung des Maschinenzustands, konfiguriert ist, und ein Computerprogrammprodukt, umfassend Befehle, die bei der Ausführung des Programms durch einen Computer diesen veranlassen, das Verfahren gemäß dem ersten allgemeinen Gesichtspunkt der Erfindung oder einer seiner Ausführungsformen, insbesondere der Erfassung des Deformationsparameters und des Rauschparameters und der Ermittlung des Maschinenzustands, auszuführen.

Die Maschinenanlage ist vorzugsweise eine Windkraftanlage oder eine andere Maschine, die mit einem periodisch arbeitenden Motor und/oder Generator ausgestattet ist, wie z. B. ein Schiff, oder ein Bauwerk, das mit einer periodisch arbeitenden Maschine zu Eigenschwingungen angeregt werden kann, wie z. B. eine Brücke, ein Gebäude, insbesondere ein Turm, ein Staudamm oder ein Tunnelbauwerk.

Der Begriff "Maschinenzustand" bezieht sich allgemein auf den Zustand der mechanischen Konfiguration der Maschinenanlage, insbesondere auf mechanische Eigenschaften der Maschinenanlage zur Zeit der Überwachung des Maschinenzustandes, wie z. B. Materialeigenschaften, insbesondere Festigkeits- und Elastizitätseigenschaften, der Maschinenanlage und/oder ihrer Bestandteile und/oder Struktureigenschaften, insbesondere die Integrität von Materialien und/oder Verbindungen von Bestandteilen, der Maschinenanlage, und/oder die zeitliche Entwicklung von mindestens einer dieser Eigenschaften. Der Maschinenzustand kann z. B. die Eigenschaft mindestens eines Materials und/oder mindestens eines Bestandteils der Maschinenanlage umfassen, frei von Versprödungen oder Rissen zu sein. Quantitative Maße des Maschinenzustands werden durch die Eigenschwingungsspektren, durch spektrale Merkmale der Eigenschwingungsspektren, wie z. B. die Lage von Maxima, die Amplituden von Maxima, die spektrale Breite von Maxima und/oder die Spektrenform, und/oder durch stochastische Eigenschaften der Eigenschwingungsspektren, und/oder deren zeitliche Entwicklung bestimmt. Die Ermittlung des Maschinenzustands der Maschinenanlage basiert auf der Erfassung des Deformationsparameters und des Rauschparameters aus mindestens einem dieser quantitativen Maße. Vorteilhafterweise kann der Maschinenzustand der Maschinenanlage unabhängig von deren Betriebszustand erfasst werden, der den aktuellen Maschinenbetrieb, wie z. B. das Fahren unter Teil-Last oder Voll-Last, charakterisiert.

Die Ermittlung des Maschinenzustands der Maschinenanlage kann eine Ausgabe einer Zustandsinformation, z. B. in Textform und/oder in grafischer Form und/oder als optisches und/oder visuelles Signal, und/oder eine Diagnose von Fehlern, insbesondere Material- und/oder Strukturfehlern in der Maschinenanlage einschließen. Ein störungs- und fehlerfreier Maschinenzustand wird auch als regulärer oder normaler Maschinenzustand bezeichnet. Abweichungen vom störungs- und fehlerfreien Maschinenzustand werden auch als irregulärer oder anormaler Maschinenzustand bezeichnet. Die Überwachung der Maschinenanlage und insbesondere die Ermittlung des Maschinenzustands kann intermittierend, zu ausgewählten Zeiten oder ununterbrochen, kontinuierlich während des Betriebs der Maschinenanlage erfolgen.

Die Bereitstellung der Zeitreihe von gemessenen Eigenschwingungsspektren der Maschinenanlage kann vorzugsweise eine Schwingungsmessung von Schwingungsrohdaten mit mindestens einem Schwingungssensor, insbesondere zur Erfassung von Oberflächenschwingungen, besonders bevorzugt einer Vielzahl von Schwingungssensoren, wie z. B. mindestens einem Dehnungssensor und/ oder Beschleunigungssensor, eine Umwandlung der Schwingungsrohdaten in Amplitudenspektren und eine Abtrennung der Eigenschwingungsspektren von einem zumeist rauschinduzierten Hintergrund und/oder Beiträgen der typischerweise drehzahlabhängigen Maschinendynamik umfassen.

Eigenschwingungsspektren können alle Frequenzen oder mindestens einen Frequenz-Teilbereich der mechanischen Schwingungen der Maschinenanlage außer den dynamisch durch die Maschine selbst angeregten Maschinenbetriebsschwingungen und deren höheren Harmonischen umfassen. Die Maschinenbetriebsschwingungen und deren höheren Harmonische können durch vorgegebenen Betriebsparameter der Maschinenanlage oder durch eine Schwingungsmessung der Maschinenbetriebsschwingungen (Drehzahlmessung) bei Betrieb der Maschinenanlage ermittelt werden.

Die optional vorgesehene Drehzahlmessung kann laufend oder zu bestimmten Abfragezeiten durchgeführt werden.

Die Bereitstellung der Zeitreihe von gemessenen Eigenschwingungsspektren umfasst eine Abtrennung der Eigenschwingungen von den Rohdaten. Die Bereitstellung der Zeitreihe von gemessenen Eigenschwingungsspektren kann lokal unmittelbar an der Maschinenanlage und/oder über eine Datenverbindung an einer entfernt von der Maschinenanlage angeordneten Überwachungsvorrichtung vorgesehen sein.

Der erfindungsgemäß erfasste Deformationsparameter ist ein quantitatives Deformationsmaß der Abweichung der Eigenschwingungsspektren von einem Referenz-Eigenschwingungsspektrum (Standardspektrum) von einer oder mehreren (z. B. bis zu 10 oder mehr) Referenz-Maschinenanlage(n) in mindestens einem Überwachungszeitintervall. Das Überwachungszeitintervall ist ein Zeitbereich (Zeitfenster), aus dem erfasste Eigenschwingungsspektren berücksichtigt werden und der die Messzeiten der zugehörigen Eigenschwingungsspektren und optional Messpausen zwischen den Messungen umfasst. Die Messzeit eines einzelnen Eigenschwingungsspektrums kann so gewählt sein, dass z. B. ein Frequenzbereich von 10⁻² Hz bis etwa 10⁴ Hz und/oder ein Zeitintervall im Bereich von wenigen Sekunden bis typischerweise 10 min abgedeckt wird. Bei der Überwachung von Turmschwingungen im Frequenzintervall 0.1 Hz bis 10 Hz sind für eine akzeptable Auflösung Messzeiten von z. B. 5 min bis 10 min bei einer Taktrate der einzelnen Schwingungsmessungen von 0.01 Sekunden sinnvoll. Die Dauer der Messpause kann z. B. jeweils bis 3 Stunden betragen. Im Überwachungszeitintervall wird eine Anzahl von Eigenschwingungsspektren gemessen. Die Anzahl von Eigenschwingungsspektren pro Überwachungszeitintervall wird so gewählt, dass der Deformationsparameter mit ausreichender statistischer Sicherheit erfasst werden kann. Vorzugsweise werden 10 bis 100, z. B. 40 bis 60, Eigenschwingungsspektren pro Überwachungszeitintervall gemessen. Die Dauer des Überwachungszeitintervalls ist z. B. im Bereich von 3 Stunden bis 2 Tagen gewählt. Bei fortgesetzter Überwachung wird das Überwachungszeitintervall als laufendes Fenster mit der laufenden Überwachung entlang der Zeitreihe von gemessenen Eigenschwingungsspektren verschoben, so dass Folgen von zeitlich veränderlichen Spektren entstehen. Die Dauer der fortgesetzten Überwachung kann zum Beispiel Monate oder Jahre betragen.

Die Referenz-Maschinenanlage kann vorzugsweise eine weitere Maschinenanlage mit der gleichen oder einer ähnlichen mechanischen Konfiguration wie die überwachte Maschinenanlage sein. Eine ähnliche mechanische Konfiguration ist zum Beispiel gegeben, wenn die Referenz-Maschinenanlage in ihren Bestandteilen überwiegend eine gleiche Bauform und/oder Konstruktion wie die überwachte Maschinenanlage aufweist. Die Referenz-Maschinenanlage oder eine von mehreren Referenz-Maschinenanlagen kann insbesondere die überwachte Maschinenanlage selbst in einem regulären Maschinenzustand in der Vergangenheit sein. Die Referenz-Maschinenanlage zeichnet sich durch den störungs- und fehlerfreien Maschinenzustand, insbesondere durch Schwingungseigenschaften bei bestimmungsgemäßen Betrieb, ohne stochastische äußere Krafteinwirkungen, wie z. B. Windböen, aus.

Alternativ kann die (oder eine der) Referenz-Maschinenanlage(n) eine idealisierte, fehlerfreie Maschinenanlage umfassen. Entsprechend kann der Deformationsparameters eine Abweichung einer arithmetisch gemittelten Resonanzkurve der überwachten Maschinenanlage von einer Standardform (z. B. Breit-Wigner-Form) repräsentieren.

Der Deformationsparameter kann als Abweichung der Eigenschwingungsspektren von einem Referenz-Eigenschwingungsspektrum durch eine arithmetische Differenzbildung der Spektren ermittelt werden. Das Referenz-Eigenschwingungsspektrum (Standardspektrum) von mehreren Referenz-Maschinenanlagen kann durch arithmetische Mittelung oder bei voneinander durch geringfügige technische Unterschiede gekennzeichnete Referenz-Maschinenanlagen durch eine gewichtete Mittelung der Referenz-Eigenschwingungsspektren der Referenz-Maschinenanlagen berechnet werden. Alternativ können die Spektren der Referenz-Maschinenanlagen auch als feste Punkte in einem Funktionenraum (Hilbert-Raum) betrachtet werden, so dass die Änderung der Abstände eines Schwingungsspektrums der untersuchten Maschinenanlage zu diesen Spektren als Maß für den Maschinenzustand der betreffenden Anlage und damit als Deformationsparameter verwendet werden kann.

Ein Referenz-Eigenschwingungsspektrum kann insbesondere auf historischen Daten der weiteren und/oder der überwachten Maschinenanlage unter der Annahme basieren, dass diese in einem regulären Maschinenzustand aufgenommen wurden. Diese Annahme kann z. B. auf einer nutzerbasierten Entscheidung oder auf einer numerischen Analyse von Referenz-Eigenschwingungsspektren aus der Vergangenheit und Auswahl einer Menge von gleichen Referenz-Eigenschwingungsspektren basieren.

Der Deformationsparameter repräsentiert quantitativ, wie stark das Eigenschwingungsspektrum vom Referenz-Eigenschwingungsspektrum abweicht und stellt damit ein Abstandsmaß zu den Referenzanlagen bzw. historischen Zuständen der betrachteten Anlage dar.

Das Referenz-Eigenschwingungsspektrum zeichnet sich durch ein geringeres Rauschen aus als die Eigenschwingungsspektren. Der erfindungsgemäß erfasste Rauschparameter (Unordnungsparameter) ist ein quantitatives Unordnungsmaß, das die Stabilität und statistische Zuverlässigkeit der zeitlichen Entwicklung der Eigenschwingungsspektren charakterisiert. Der Rauschparameter ist in der Regel im regulären Betrieb kleiner als im irregulären Betrieb, d. h. der Rauschparameter wächst, wenn Eigenschwingungen, z. B. durch mechanische Instabilitäten, stärker angeregt werden als im regulären Betrieb und insbesondere die spektrale Breite der Maxima bei den Eigenfrequenzen wächst.

Vorteilhafterweise hat der Erfinder mit dem Deformationsparameter und dem Rauschparameter eine Kombination von zwei mathematisch aussagekräftigen Indikatoren gefunden, die gemeinsam eine zuverlässige und reproduzierbare, optional automatisierbare, quantitative Bewertung der Eigenschwingungsspektren erlauben. Für jedes Überwachungszeitintervall liefert der Rauschparameter eine Aussage über das Rauschen im Eigenschwingungsspektrum, z. B. durch stochastische Einwirkungen von außen. Der Rauschparameter verbessert eine Bewertung des Deformationsparameters dahingehend, dass Änderungen in den Eigenschwingungsspektren zuverlässiger auf unkritische stochastische Effekte oder auf die gesuchten strukturellen Veränderungen der Maschinenanlage zurückgeführt werden können. Mit anderen Worten, eine Deformation der Eigenschwingungsspektren, die durch ein unkritisches Rauschen verursacht wird, führt nicht nur Ermittlung eines irregulären Maschinenzustandes. Der Deformationsparameter und der Rauschparameter reagieren auf geringe Änderungen Eigenschwingungsspektren, so dass im Vergleich zu herkömmlichen Methoden irreguläre Betriebszustände mit erhöhter Empfindlichkeit und Zuverlässigkeit gemessen werden können.

Ein weiterer Vorteil besteht darin, dass der Deformationsparameter und der Rauschparameter allgemeingültige Indikatoren sind, die insbesondere auf funktionentheoretischer bzw. funktionenanalytischer (mathematischer) Basis erfasst werden und im Wesentlichen nicht zwingend von Lerndaten oder Expertenwissen abhängen. Die Indikatoren reagieren auf Abweichungen vom typischen Erscheinungsbild der Eigenschwingungsspektren und auf erhöhte Messungenauigkeiten. Auch andere Fehler der Maschinenanlage, wie z. B. Sensor- oder Maschinendefekte, können ermittelt werden und ggf. einen Alarm auslösen. Der Deformationsparameter und der Rauschparameter erlauben eine vereinfachte Ausgabe von Überwachungsergebnissen.

Gemäß einer bevorzugten Ausführungsform der Erfindung kann der Deformationsparameter eine Distension einer Amplituden-Zeit-Funktion der gemessenen Eigenschwingungsspektren in mindestens einem Intervall von Schwingungsfrequenzen in Bezug auf eine Referenz-Amplituden-Zeit-Funktion der Referenz-Eigenschwingungsspektren der mindestens einen Referenz-Maschinenanlage in dem mindestens einen Intervall von Schwingungsfrequenzen umfassen.

Gemäß einer weiteren bevorzugten Ausführungsform der Erfindung kann der Rauschparameter eine Distension einer Amplituden-Zeit-Funktion der gemessenen Eigenschwingungsspektren in mindestens einem Intervall von Schwingungsfrequenzen in Bezug auf eine geglättete Amplituden-Zeit-Funktion der gemessenen Eigenschwingungsspektren in dem mindestens einen Intervall von Schwingungsfrequenzen umfassen.

Das bei der Berechnung der Distension zur Ermittlung des Deformations- oder Rauschparameters betrachtete Intervall von Schwingungsfrequenzen ist so gewählt, dass es ein Maximum (Peak) des Eigenschwingungsspektrums enthält. Wenn das Eigenschwingungsspektrum mehrere Maxima, d. h. mehrere charakteristische Eigenschwingungen, aufweist, so wird die Distension entsprechend in mehreren Intervallen von Schwingungsfrequenzen ermittelt, welche jeweils eines der Maxima enthalten. Die Berechnung in einem einzigen Intervall von Schwingungsfrequenzen bei einem einzigen Maximum des Eigenschwingungsspektrums kann z. B. vorgesehen sein, wenn nur eine einzige Eigenschwingung angeregt und/oder zur Beurteilung des Maschinenzustands der Maschinenanlage ausreichend ist (z. B. wenn nur eine Eigenschwingung der Gondel überwacht werden soll) und/oder wenn ein größeres Fehlerrisiko bei der Bewertung des Maschinenzustands der Maschinenanlage toleriert werden kann.

Die Distension ist ein quantitatives Maß der Verzerrung der Amplituden-Zeit-Funktion, insbesondere einschließend eine Skalierung (Vergrößerung oder Verkleinerung), eine Dehnung (oder Stauchung) und/oder eine Blähung der Amplituden-Zeit-Funktion. Die Erfassung der Distension kann eine Berechnung einer Distanz, wie z. B. einer euklidischen Distanz, einer Hamming-Distanz oder eines anderen Distanzmaßes, zwischen der Amplituden-Zeit-Funktion und der Referenz-Amplituden-Zeit-Funktion oder der geglätteten Amplituden-Zeit-Funktion bei den vorbestimmten Schwingungsfrequenzen für jedes gemessene Eigenschwingungsspektrum der Zeitreihe und eine Summation der Distanzen über die Zeitreihe umfassen. Die Distension kann insbesondere ermittelt werden, wie z. B. in "Control Theory in Physics and other Fields of Science" von Michael Schulz (Springer, 2005) oder in "Computational Intelligence" von Rudolf Kruse et al. (Vieweg + Teubner, 2011) beschrieben ist.

Die Erfassung der Distension der Amplituden-Zeit-Funktion der gemessenen Eigenschwingungsspektren zur Ermittlung des Deformationsparameters und/oder des Rauschparameters hat den Vorteil, dass die Distension den Deformationsparameter und/oder den Rauschparameter mit besonders hoher Empfindlichkeit und Zuverlässigkeit liefert.

Vorteilhafterweise kann die Erfassung des Deformationsparameters und des Rauschparameters und die Ermittlung des Maschinenzustands der Maschinenanlage fortlaufend in jeweils neuen Überwachungszeitintervallen mit der Bereitstellung jedes aktuellen gemessenen Eigenschwingungsspektrums der Zeitreihe von gemessenen Eigenschwingungsspektren wiederholt werden. Diese Ausführungsform der Erfindung kann besondere Vorteile für ein laufendes Monitoring einer Maschinenanlage, insbesondere einer Windkraftanlage, haben.

Vorzugsweise kann die Analyseeinrichtung der Überwachungsvorrichtung eingerichtet sein, die Distension zur Ermittlung des Deformationsparameters und/oder des Rauschparameters, z. B. fortlaufend, zu erfassen.

Gemäß einer weiteren vorteilhaften Variante der Erfindung kann die Bereitstellung jedes Eigenschwingungsspektrums der Zeitreihe der gemessenen Eigenschwingungsspektren die Schritte Messung von Schwingungsrohdaten mit einer Vielzahl von Schwingungssensoren, die zur Schwingungsmessung an der Maschinenanlage angeordnet sind, Umwandlung der Schwingungsrohdaten in Schwingungsspektren der Maschinenanlage, wobei die Schwingungsspektren dynamisch angeregte Maschinenschwingungen und Eigenschwingungen der Maschinenanlage enthalten, und Filterung der Schwingungsspektren zur Beseitigung der dynamisch angeregten Maschinenschwingungen umfassen, wobei die gemessenen Eigenschwingungsspektren erhalten wird.

Die Schwingungssensoren sind Teil der Messeinrichtung der Überwachungsvorrichtung. Zur Umwandlung der Schwingungsrohdaten kann eine Konvertierungseinrichtung der Überwachungsvorrichtung eingerichtet sein, und zur Filterung des Schwingungsspektrums kann eine Filtereinrichtung der Überwachungsvorrichtung eingerichtet sein.

Optional kann des Weiteren eine Glättung des gefilterten Schwingungsspektrums vorgesehen sein. Die Glättung kann durch wiederholte Messungen der Eigenschwingungsspektren, im Fall einer Windkraftanlage zum Beispiel über einen Zeitraum von bis zu 4 Stunden, und eine Mittelung der Eigenschwingungsspektren ausgeführt werden. Vorteilhafterweise werden durch die Glättung Auswirkungen des Windes auf die Eigenschwingungsspektren reduziert.

Die Zahl der Schwingungssensoren kann in Abhängigkeit von den konkreten Anwendungsbedingungen und der Überwachungsaufgabe gewählt werden. Im Fall einer Windkraftanlage werden mindestens 5, vorzugsweise 8 bis 15 Schwingungssensoren zur Schwingungsmessung verwendet, die zum Beispiel am Hauptlager, am Generator, am Turm und in den Getriebestufen des Generatorgetriebes angeordnet sind.

Besonders bevorzugt kann die Filterung des Schwingungsspektrums eine Anwendung eines Kalman-Filters auf die Schwingungsspektren umfassen. Der Kalman-Filter ist ein Zeitreihenfilter, der auf Amplituden-Zeit-Funktionen bei vorgegebenen Frequenzen aufeinanderfolgender Eigenschwingungsspektren angewendet wird. Der Kalman-Filter wird z. B. konstruiert, wie in "Control Theory in Physics and other Fields of Science - Concepts, Tools, and Applications" von Michael Schulz (Springer, 2005) oder in "Optimal Control" von Arturo Locatelli (Birkhäuser, 2001) beschrieben ist. Der Kalman Filter, der zum Beispiel ein zeitlich diskreter oder kontinuierlicher Filter sein kann, unterscheidet die messtechnisch bedingten Beobachtungsfehler und die als Folge von Störungen bzw. Rauscheinflüssen entstehenden Abweichungen in der Maschinen- und Strukturdynamik und kann daher besonders gut zufällige Einflüsse aus den Schwingungsspektren beseitigen. Vorteilhafterweise werden deshalb durch den Kalman-Filter mit hoher Wirksamkeit sowohl Rauschbeiträge als auch Reste der Maschinendynamik (Maschinenbetriebsschwingungen, d. h. Drehzahl, und höhere Harmonische) aus den Eigenschwingungsspektren eliminiert.

Alternativ kann die Bereitstellung jedes Eigenschwingungsspektrums der Zeitreihe der gemessenen Eigenschwingungsspektren erfolgen, während keine Maschinenschwingungen mit der Maschine der Maschinenanlage periodisch angeregt werden. Bei dieser Ausführungsform der Erfindung kann die Bereitstellung jedes Eigenschwingungsspektrums somit eine Messung von Schwingungsrohdaten mit einer Vielzahl von Schwingungssensoren, die zur Schwingungsmessung an der Maschinenanlage angeordnet sind, während die Maschinenanlage in einem Zustand ohne dynamisch angeregte Maschinenschwingungen ist, und eine Umwandlung der Schwingungsrohdaten in Schwingungsspektren der Maschinenanlage umfassen, wobei die Schwingungsspektren die gemessenen Eigenschwingungsspektren bilden. Der Zustand ohne dynamisch angeregte Maschinenschwingungen ist zum Beispiel gegeben, wenn eine Maschinenanlage abgeschaltet, z. B. eine Windkraftanlage sich im Stillstand oder im Trudelbetrieb befindet, oder eine Maschinenanlage ohne anregende Maschine überwacht wird.

Auch im Fall der nicht dynamisch periodisch angeregten Maschinenanlage kann optional eine Glättung und/oder eine Filterung der Schwingungsspektren vorgesehen sein, welche die Anwendung des Kalman-Filters auf das Schwingungsspektrum umfasst, wodurch vorteilhafterweise eine zusätzliche Glättung der Eigenschwingungsspektren erzielt wird.

Gemäß einer besonders bevorzugten Ausführungsform der Erfindung ist eine Ermittlung eines mehrdimensionalen Bewertungsparameters aus dem Deformationsparameter und dem Rauschparameter vorgesehen, wobei der Maschinenzustand aus dem mehrdimensionalen Bewertungsparameter ermittelt wird. Vorteilhafterweise wird durch die Ermittlung des mehrdimensionalen Bewertungsparameters die Ermittlung des Maschinenzustandes der Maschinenanlage erleichtert. Der mehrdimensionale Bewertungsparameter erlaubt eine unmittelbare Bewertung, ob ein Maschinenzustand regulär oder irregulär ist oder ob ein kritischer Zwischenzustand vorliegt.

Vorzugsweise kann die Überwachungsvorrichtung eine Bewertungseinrichtung enthalten, die zur Ermittlung des mehrdimensionalen Bewertungsparameters aus dem Deformationsparameter und dem Rauschparameter und zur Ermittlung des Maschinenzustands aus dem Bewertungsparameter eingerichtet ist.

Vorteilhafterweise sind verschiedene Möglichkeiten verfügbar, den mehrdimensionale Bewertungsparameter zu erfassen. Gemäß einer ersten Variante kann der Bewertungsparameter eine Position des Deformationsparameters und des Rauschparameters, die zu einem gemeinsamen Überwachungszeitintervall erfasst sind, in einem mindestens zweidimensionalen Bewertungsfeld umfassen. Das Bewertungsfeld ist z. B. eine ebene Karte mit zwei Koordinaten, welche durch den Deformationsparameter und den Rauschparameter repräsentiert werden. Beispielsweise kann ein kartesisches Koordinatensystem vorgesehen sein, dessen Achsen den Deformationsparameter und den Rauschparameter repräsentieren. Alternativ sind andere Koordinatensysteme verwendbar und/oder durch Einbeziehung weiterer aktueller Zustandsparameter der Maschinenanlage, wie z. B. zur Überwachung von Energieanlagen erhobene SCADA-Daten (Kontrolldaten) und/oder Informationen aus der Anlagensteuerung und/oder verfügbare Umweltdaten o. dgl., wie z. B. die Öltemperatur von Getriebeöl, ein Blindwiderstand des Generators, eine Drehgeschwindigkeit des Generators, die Stellung von Rotorblättern und/oder Wetterdaten, ein höherdimensionales Bewertungsfeld (höherdimensionales Koordinatensystem) realisierbar.

Der Bewertungsparameter liefert eine aktuelle Position und vorzugsweise bei fortlaufender Überwachung eine Trajektorie im Bewertungsfeld. Verschiedene Bereiche im Bewertungsfeld können z. B. einem regulären Maschinenzustand oder einem irregulären Maschinenzustand oder optional zusätzlich einem kritischen Zwischenzustand zugeordnet werden. Die Ermittlung des Maschinenzustandes kann erfolgen, indem die Position oder optional die Trajektorie in einem der Bereiche im Bewertungsfeld erfasst wird.

Des Weiteren können verschiedene Teilbereiche von Bereichen im Bewertungsfeld, die einen irregulären Maschinenzustand oder optional einen kritischen Zwischenzustand repräsentieren, bestimmten Störungen der Maschinenanlage oder ihrer Bestandteile zugeordnet werden, so dass die aktuelle Position und vorzugsweise die Trajektorie im Bewertungsfeld auch eine Diagnose ermöglicht, an welchen Bestandteilen der Maschinenanlage eine Irregularität auftritt. Diese Diagnose kann z. B. auf Referenzmessungen an vergleichbaren Anlagen und/oder Erfahrungswerten beruhen.

Alternativ oder zusätzlich kann gemäß einer weiteren Variante der Bewertungsparameter ein mindestens zweidimensionales Funktional des Deformationsparameters und des Rauschparameters umfassen, die zu einer gemeinsamen Überwachungszeit erfasst sind. Vorteilhafterweise erlaubt das Funktional die unmittelbare Klassifizierung des Maschinenzustands als regulär oder irregulär oder optional als kritischer Zwischenzustand.

Gemäß einer weiteren besonders bevorzugten Ausführungsform der Erfindung kann die Ermittlung des Maschinenzustands eine Klassifizierung des Bewertungsparameters, z. B. mit einer Klassifizierungseinrichtung der Überwachungsvorrichtung, durch einen Vergleich mit vorbestimmten Parameterbereichen, z. B. den Bereichen im Bewertungsfeld oder vorgegebenen Wertebereichs-Intervallen des Funktionals, und eine Ausgabe des Maschinenzustands, z. B. mit einer Ausgabeeinrichtung der Überwachungsvorrichtung, in Abhängigkeit vom Ergebnis der Klassifizierung umfassen. Die Ausgabe des Maschinenzustands kann z. B. in Textform oder in grafischer Form oder als optisches und/oder visuelles Signal, insbesondere Alarm, erfolgen, und/oder eine Diagnose von Fehlern in der Maschinenanlage umfassen.

Vorteilhafterweise erlaubt die Klassifizierung eine Aufspaltung der Menge von Zuständen der Maschinenanlage in mindestens zwei, z. B. zwei, drei oder mehr Submengen, wie z. B. Normal, Kritisch, Alarm. Beispielsweise können alle bekannten oder erkennbaren Anomalitäten als kritisch und/oder alarmierungswürdig verifiziert werden und alle normal erscheinenden Betriebszustände der Normalklasse zugeordnet werden.

Weitere Einzelheiten und Vorteile der Erfindung werden im Folgenden unter Bezug auf die beigefügten Zeichnungen beschrieben. Die Zeichnungen zeigen schematisch in:
- Figur 1:: Merkmale von Verfahren zur Überwachung eines Maschinenzustands einer Maschinenanlage gemäß Ausführungsformen der Erfindung;
- Figur 2:: Merkmale von Vorrichtungen zur Überwachung eines Maschinenzustands einer Maschinenanlage gemäß Ausführungsformen der Erfindung;
- Figur 3:: Beispiele praktischer Anwendungen der Erfindung; und
- Figur 4:: eine Visualisierung eines Bewertungsparameters in einem zweidimensionalen Bewertungsfeld.

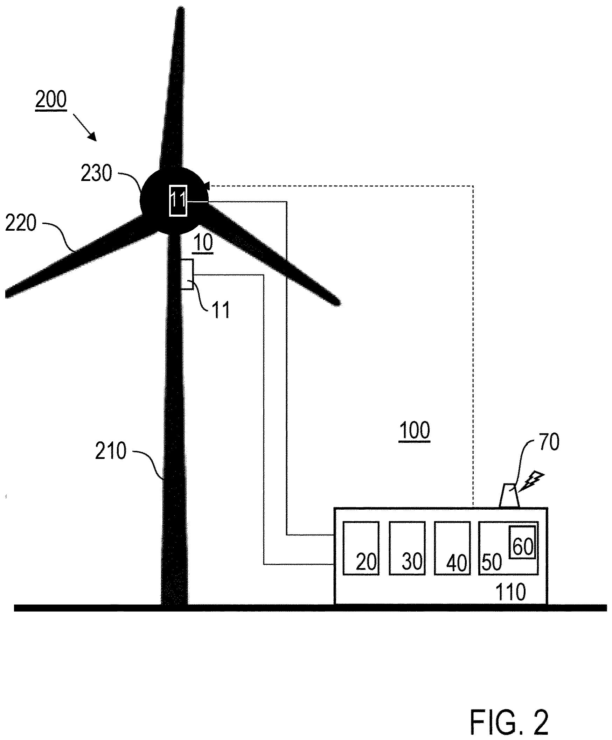

Merkmale von Ausführungsformen der Erfindung werden im Folgenden unter beispielhaftem Bezug auf die Überwachung einer Windkraftanlage 200 beschrieben, die schematisch in Figur 2 gezeigt ist und einen Turm 210, einen Rotor 220 und eine Gondel 230 umfasst. Die Windkraftanlage 200 ist mit einer Vielzahl von Schwingungssensoren 11 versehen, welche jeweils einen Messkanal der Messeinrichtung 10 der Überwachungsvorrichtung 100 gemäß Figur 2 bereitstellen. Die Anwendung der Erfindung ist nicht auf die Überwachung einer Windkraftanlage beschränkt, sondern entsprechend mit anderen Maschinenanlagen möglich. Eigenschaften von Windkraftanlagen, deren betrieb, insbesondere Steuerung, und der Schwingungsmessung an Windkraftanlagen werden nicht erläutert, soweit diese an sich von herkömmlichen Windkraftanlagen bekannt sind.

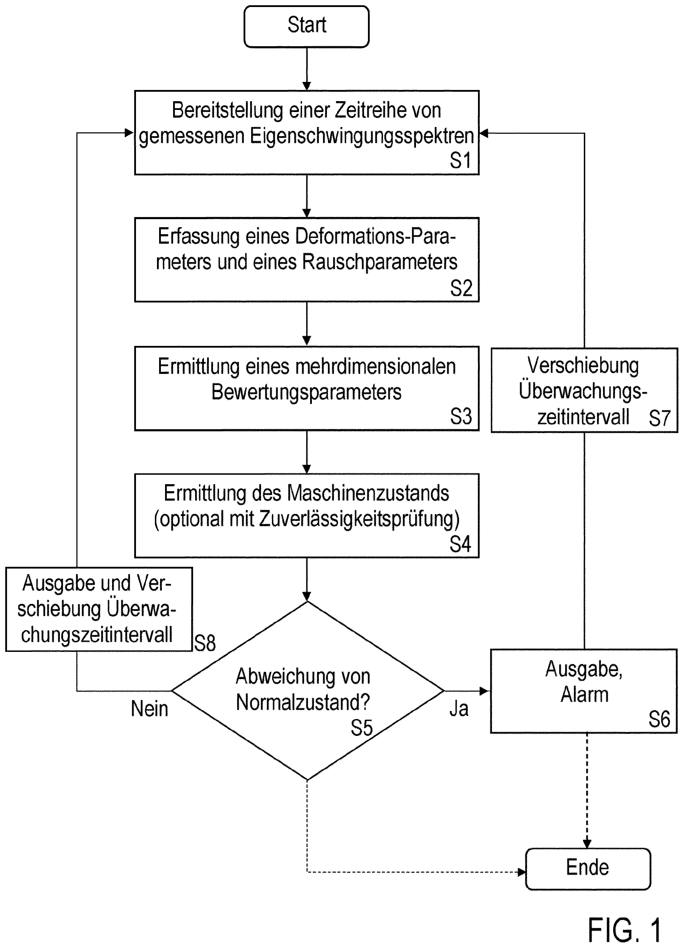

Figur 1 zeigt ein Flussdiagramm mit Schritten des Verfahrens zur Überwachung des Maschinenzustands der Windkraftanlage 200, wobei gemäß verschiedenen Ausführungsformen der Erfindung alle Schritte in Kombination oder ein Teil der Schritte (z. B. das gezeigte Verfahren ohne den Schritt S3) oder zusätzliche Schritte (z. B. zur Zuverlässigkeitsbewertung) vorgesehen sein können, wie unten erläutert ist. Das Verfahren wird vorzugsweise laufend während des Betriebs der Windkraftanlage 200 ausgeführt, d. h. es können über Jahre der Nutzungsdauer gesammelte Schwingungsrohdaten ausgewertet und zur Überwachung verwendet werden.

Das Verfahren gemäß Figur 1 wird jeweils für mindestens einen der Schwingungssensoren 11 durchgeführt. Es kann ein einziger Schwingungssensor 11 zur Überwachung verwendet werden, oder es können mehrere oder alle Schwingungssensoren 11 jeweils gesondert zur Überwachung verwendet werden. Jeder der Schwingungssensoren 11 kann zur Erfassung einer anderen Strukturschwingung der Windkraftanlage 200 angeordnet sein. Ein irregulärer Maschinenzustand der Windkraftanlage 200 kann erkannt werden, wenn die Auswertung der Schwingungsdaten von mindestens einem der Schwingungssensoren 11 die Erkennung einer Störung ergibt oder wenn die Auswertung der Schwingungsdaten von mehreren oder allen der Schwingungssensoren 11 die Erkennung von Störungen ergibt. Mit den Schwingungssensoren 11 der Messeinrichtung 10 werden Schwingungsrohdaten gemessen. Die Schwingungssensoren 11 werden mit einer Abtastrate von ungefähr 10³ Hz ausgelesen, wobei pro Amplitudenspektrum-Rohdatensatz ca. 10⁷ Messpunkte erfasst werden.

Das Verfahren gemäß Figur 1 wird vorzugsweise mit der in Figur 2 schematisch gezeigten Überwachungsvorrichtung 100 ausgeführt, welche die Messeinrichtung 10 mit den Schwingungssensoren 11, eine Konvertierungseinrichtung 20, eine Filtereinrichtung 30, eine Analyseeinrichtung 40, eine Bewertungseinrichtung 50 mit einer Klassifizierungseinrichtung 60, und eine Alarmeinrichtung 70 umfasst. Die Konvertierungseinrichtung 20, die Filtereinrichtung 30, die Analyseeinrichtung 40 und die Bewertungseinrichtung 50 werden vorzugsweise durch eine oder mehrere Computereinheiten, wie z. B. ein oder mehrere FPGA's bereitgestellt. Für jeden Messkanal, d. h. für jeden Schwingungssensor 11, kann gesondert eine Konvertierungseinrichtung 20, eine Filtereinrichtung 30, eine Analyseeinrichtung 40 und eine Bewertungseinrichtung 50 vorgesehen sein. Alternativ können die Konvertierungseinrichtung 20, die Filtereinrichtung 30, die Analyseeinrichtung 40 und die Bewertungseinrichtung 50 getrennte Datenverarbeitungskanäle jeweils für die Messkanäle enthalten. Die Alarmeinrichtung 70 umfasst z. B. mindestens einen optischen Alarm und/oder mindestens einen Audioalarm. Für verschiedene Störungen, z. B. an verschiedenen Bestandteilen der Windkraftanlage 200, und/oder verschiedene Messkanäle können verschiedene Alarmsignale vorgesehen sein.

Gemäß Figur 1 umfasst die Überwachung der Windkraftanlage 200 zunächst einen Schritt S1 der Bereitstellung einer Zeitreihe von gemessenen Eigenschwingungsspektren der Windkraftanlage 200. Der Zeitbereich, den die erfasste Zeitreihe von gemessenen Eigenschwingungsspektren abdeckt, wird auch als Überwachungszeitintervall bezeichnet. Auf das Überwachungszeitintervall, das z. B. im Bereich von 3 Stunden bis 2 Tage gewählt ist, bezieht sich die bei Schritt S2 nachfolgende Erfassung des Deformationsparameters und des Rauschparameters. Bei laufender Überwachung wird das Überwachungszeitintervall nach jedem Durchlauf (Zyklus) des Verfahrens um eine vorbestimmte Schrittweite, z. B. um 3 bis 4 Stunden, verschoben (siehe unten, Schritt S8).

Mit der Konvertierungseinrichtung 20 erfolgt bei Schritt S1 eine Umwandlung der Schwingungsrohdaten in Schwingungsspektren der Windkraftanlage 200. Die Umwandlung umfasst eine Frequenz-Amplituden-Analyse der Schwingungsrohdaten und die Bildung von Datensätzen, die jeweils ein Schwingungsspektrum repräsentieren. Jedes Schwingungsspektrum enthält zunächst noch dynamisch angeregte Maschinenschwingungen, d. h. die periodischen Anregungen aufgrund der Drehzahl des Generators, und die Eigenschwingungen der Windkraftanlage 200.

Mit der Filtereinrichtung 30 folgt bei Schritt S1 die Gewinnung der Eigenschwingungen der Windkraftanlage 200 aus den Schwingungsspektren-Datensätzen, da die erfindungsgemäße Überwachung der Windkraftanlage 200 auf der qualitativen Bewertung der Eigenschwingungen basiert. Die dynamisch angeregten Schwingungen und deren höhere Harmonische werden mit der Filtereinrichtung 30 eliminiert. Die Filterung der Schwingungsspektren basiert z. B. auf einer an sich bekannten FFT-(Fast Fourier Transformation)-Anwendung und einer Subtraktion der dynamisch angeregte Maschinenschwingungen und der höheren Harmonischen im Frequenzraum. Die Frequenz der dynamisch angeregten Maschinenschwingungen ist allgemein durch die Betriebsbedingungen der Maschinenanlage und insbesondere durch eine Drehzahlmessung am Generator der Windkraftanlage 200 bekannt.

Im Ergebnis des Ausfilterns der dynamisch angeregten Maschinenschwingungen wird eine Zeitreihe gemessener Eigenschwingungsspektren bereitgestellt, wie beispielhaft in Figur 3A gezeigt ist, wobei f eine lineare Frequenzachse mit Frequenzen z. B. im Bereich von 0 Hz bis 1 kHz, A eine lineare Amplitudenachse der bei den Frequenzen auftretenden Schwingungsamplituden (relative Einheiten) und t eine lineare Zeitachse über einen Zeitraum von z. B. 250 Tagen (Dauer der fortgesetzten Überwachung) repräsentieren. Das Überwachungszeitintervall beträgt z. B. 1 Tag. Figur 3A illustriert beispielhaft, dass sich die gewonnene zeitliche Evolution gemessener Eigenschwingungsspektren zunächst noch durch ein Rauschen auszeichnet, das eine Ableitung von Irregularitäten unmittelbar aus den Eigenschwingungsspektren erschweren würde.

Aus den Eigenschwingungsspektren werden bei einer Vielzahl von vorgegebenen Frequenzen zunächst ungeglättete Amplituden-Zeit-Funktionen gewonnen. Jede Amplituden-Zeit-Funktion umfasst Amplituden der Eigenschwingungsspektren bei der jeweiligen vorgegebenen Frequenz im Überwachungszeitintervall. Im erfassten Frequenzbereich werden zum Beispiel 8 Frequenzen ausgewählt, zu denen jeweils ein Datensatz ermittelt wird, der die zugehörige Amplituden-Zeit-Funktion repräsentiert.

Zur Verringerung des Rauschens erfolgt vorzugsweise mit der Filtereinrichtung 30 eine Glättung der Eigenschwingungsspektren, insbesondere der Amplituden-Zeit-Funktionen der Eigenschwingungsspektren, durch Anwendung eines Kalman-Filters auf die Amplituden-Zeit-Funktionen der Schwingungsspektren. Der Kalman-Filter wird als Zeitreihenfilter auf jede Amplituden-Zeit-Funktion angewendet, wobei Rauschen entfernt und als geglättete Amplituden-Zeit-Funktion ein geglättetes Signal größter Wahrscheinlichkeit ermittelt wird.

Nach Anwendung des Kalman-Filters können aus den geglätteten Amplituden-Zeit-Funktionen die Eigenschwingungsspektren mit verringertem Rauschen rückgewonnen werden . Im Ergebnis der Filterung mit dem Kalman-Filter wird somit eine Zeitreihe gemessener Eigenschwingungsspektren mit deutlich verringertem Rauschen bereitgestellt, wie beispielhaft in Figur 3B oder 3C gezeigt ist.

Die Figuren 3B und 3C illustrieren die vorteilhafte Wirkung der Glättung der Eigenschwingungsspektren mit dem Kalman-Filter. Im Unterschied zu dem stark verrauschten Bild der Figur 3A sind Eigenschwingungen und ihre zeitliche Entwicklung deutlich erkennbar. Gemäß Figur 3B weist die Eigenschwingung eine im Wesentlichen konstante Frequenz und relativ wenig veränderliche Amplitude auf, was die Erkennung eines regulären Maschinenzustands der Windkraftanlage 200 erlaubt. Gemäß Figur 3C spaltet die Eigenschwingung in zwei Teilschwingungen auf, wobei sich die Frequenz der neuen abgespaltenen Eigenschwingung im Zeitverlauf verändert, was die Erkennung einer Veränderung der mechanischen Konfiguration und damit eines irregulären Maschinenzustands der Windkraftanlage 200 erlaubt.

Nachfolgend wird bei Schritt S2 mit der Analyseeinrichtung 40 der Deformationsparameter der Eigenschwingungsspektren als Distension der geglätteten Amplituden-Zeit-Funktionen der Eigenschwingungsspektren in einem Intervall von Schwingungsfrequenzen um ein oder mehrere Maxima der Eigenschwingungsspektren in Bezug auf eine Referenz-Amplituden-Zeit-Funktion von einem Referenz-Eigenschwingungsspektrum von mindestens einer Referenz-Windkraftanlage in dem Intervall von Schwingungsfrequenzen ermittelt.

Des Weiteren wird bei Schritt S2 mit der Analyseeinrichtung 40 der Rauschparameter der Eigenschwingungsspektren als Distension der ungeglätteten Amplituden-Zeit-Funktionen der Eigenschwingungsspektren in dem Intervall von Schwingungsfrequenzen um das eine oder die mehreren Maxima der Eigenschwingungsspektren in Bezug auf die zuvor berechnete geglättete Amplituden-Zeit-Funktion der gemessenen Eigenschwingungsspektren in dem Intervall von Schwingungsfrequenzen ermittelt.

Zur Berechnung der Distension werden jeweils die Abweichungen (Distanzen) der geglätteten Amplituden-Zeit-Funktionen von der Referenz-Amplituden-Zeit-Funktion oder die Abweichungen der ungeglätteten Amplituden-Zeit-Funktionen von der geglätteten Amplituden-Zeit-Funktion summiert.

Bei einer stärkeren Änderung der geglätteten Amplituden-Zeit-Funktionen in Bezug auf die Referenz-Amplituden-Zeit-Funktion wird eine größere Distension bzw. ein größerer Deformationsparameter ermittelt als bei einer geringeren Änderung der geglätteten Amplituden-Zeit-Funktionen. Entsprechend liefert der Deformationsparameter unmittelbar ein Maß für die Änderung der Eigenschwingungsspektren im Überwachungszeitintervall. Des Weiteren wird einem stärkeren Rauschen der ungeglätteten Amplituden-Zeit-Funktionen in Bezug auf die geglättete Amplituden-Zeit-Funktion eine größere Distension bzw. ein größerer Rauschparameter ermittelt als bei einem geringeren Rauschen. Entsprechend liefert der Rauschparameter unmittelbar ein Maß für die stochastische Unordnung Eigenschwingungsspektren im Überwachungszeitintervall.

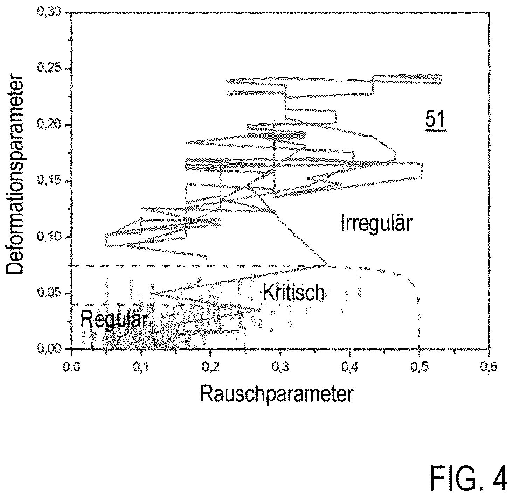

Beim optional vorgesehenen Schritt S3 wird mit der Bewertungseinrichtung 50 ein mehrdimensionaler Bewertungsparameter aus den Rausch- und Deformationsparametern ermittelt. Ein Beispiel des Bewertungsparameters ist die Position in einem zweidimensionalen Bewertungsfeld 51, wie schematisch in Figur 4 gezeigt ist. Dimensionen des Bewertungsfeldes 51 sind die Rausch- und Deformationsparameter. Der Bewertungsparameter ist durch die Position der aktuellen Rausch- und Deformationsparameter im Bewertungsfeld 51 gegeben, und er kann auf einer Anzeige der Überwachungsvorrichtung 100 angezeigt werden. Schritt S3 ist nicht zwingend vorgesehen. Die Rausch- und Deformationsparameter können auch unmittelbar zur Ermittlung des Maschinenzustandes der Windkraftanlage 200 verwendet werden. Des Weiteren kann ein anderer Bewertungsparameter verwendet werden, wie z. B. ein auf den Rausch- und Deformationsparametern basierendes Funktional.

Anschließend wird der aktuelle Maschinenzustand der Windkraftanlage bei Schritt S4 ermittelt, indem der Bewertungsparameter mit der Klassifizierungseinrichtung 60 einer Klassifizierung unterzogen wird. Beispielsweise wird festgestellt, ob der aktuelle Bewertungsparameter in eines der 3 Bereiche "Regulär", "Kritisch" oder "Irregulär" des Bewertungsfeldes 51 fällt (siehe Figur 4).

Zusätzlich zur Klassifizierung kann bei Schritt S4 eine Zuverlässigkeitsbewertung durchgeführt werden. Dabei wird ein Zuverlässigkeitsmaß ermittelt, mit dem z. B. die Fehlerwahrscheinlichkeit des Bewertungsparameters quantifiziert wird. Als Zuverlässigkeitsmaß kann z.B. die nach dem Kolmogorov-Smirnov Verfahren geschätzte Abweichung der Fehlerverteilung der gemessenen Maschinenanlage von der Fehlerverteilung der Referenz-Maschinenanlagen verwendet werden. Das Zuverlässigkeitsmaß erlaubt, in Reaktion auf die Erkennung eines kritischen oder irregulären Maschinenzustandes passende Maßnahmen an der Windkraftanlage 200 auszuführen. Beispielsweise kann im Fall eines Alarms bei einer hohen Fehlerwahrscheinlichkeit automatisiert zunächst der Betrieb der Windkraftanlage 200 fortgesetzt werden, um das aktuelle Überwachungsergebnis zu verifizieren, oder bei einer niedrigen Fehlerwahrscheinlichkeit kann eine Notabschaltung der Windkraftanlage 200 vorgesehen sein.

Wenn bei Schritt S5 eine Abweichung vom Normalzustand festgestellt wird, d.h. wenn der Bewertungsparameter insbesondere in den Bereich "Kritisch" oder in den Bereich "Irregulär" des Bewertungsfeldes 51 fällt, folgen mit Schritt S6 eine Ausgabe des Ergebnisses der Ermittlung des Maschinenzustands und ein Alarm mit der Alarmeinrichtung 70. Der Alarm mit der Alarmeinrichtung 70 kann je nach dem erfassten Zustand verschiedene Signale beinhalten. Anschließend kann ungeachtet des Alarms die Überwachung der Windkraftanlage 200 fortgesetzt werden, indem das Überwachungszeitintervall S7 verschoben wird und das Verfahren mit Schritt S1 mit dem aktualisierten Überwachungszeitintervall erneut beginnt. Alternativ kann, insbesondere im Fall einer alarmbedingten Beendigung des Betriebs der Windkraftanlage 200, das Verfahren beendet werden.

In Reaktion auf den Alarm kann z. B. eine Detail-Analyse der Schwingungsdaten, eine Änderung der Betriebsbedingungen der Windkraftanlage 200 (ggf. mit einer Abschaltung) und/oder eine Wartung der Windkraftanlage 200 durch Wartungspersonal vorgesehen sein.

Alternativ, wenn bei Schritt S5 keine Abweichung vom Normalzustand festgestellt wird, d.h. wenn der Bewertungsparameter in den Bereich "Regulär" des Bewertungsfeldes fällt, folgt kein Alarm, sondern mit Schritt S8 eine Ausgabe des Ergebnisses der Ermittlung des Maschinenzustands und eine Verschiebung des Überwachungszeitintervalls sowie der Sprung zu Schritt S1 mit dem aktualisierten Überwachungszeitintervall. Alternativ kann, insbesondere im Fall einer planmäßigen Beendigung des Betriebs der Windkraftanlage 200, das Verfahren beendet werden.

Die Ausgabe des Ergebnisses der Ermittlung des Maschinenzustands in Schritt S6 oder S8 kann z. B. in Textform oder vorzugsweise in Gestalt eines Farbsignals erfolgen. Der Betriebsverlauf kann z. B. auf einer Anzeige der Überwachungsvorrichtung 100 oder einem gesonderten Steuergerät der Windkraftanlage 200 als fortlaufender Streifen mit einem Farbcode wiedergegeben werden, wobei verschiedene Farben verschiedene Betriebszustände anzeigen.

Die in der vorstehenden Beschreibung, den Zeichnungen und den Ansprüchen offenbarten Merkmale der Erfindung können sowohl einzeln als auch in Kombination oder Unterkombination für die Verwirklichung der Erfindung in ihren verschiedenen Ausgestaltungen von Bedeutung sein.

## Patentansprüche

1. Verfahren zur Überwachung eines Maschinenzustands einer Maschinenanlage (200), insbesondere einer Windkraftanlage, mit den Schritten:
- Bereitstellung einer Zeitreihe von gemessenen Eigenschwingungsspektren der Maschinenanlage (200),
- Erfassung eines Deformationsparameters in mindestens einem Überwachungszeitintervall, wobei der Deformationsparameter für eine Abweichung der gemessenen Eigenschwingungsspektren von einem Referenz-Eigenschwingungsspektrum von mindestens einer Referenz-Maschinenanlage charakteristisch ist,
- Erfassung eines Rauschparameters zu dem mindestens einen Überwachungszeitintervall, wobei der Rauschparameter für ein Rauschen der gemessenen Eigenschwingungsspektren charakteristisch ist, und
- Ermittlung des Maschinenzustands aus dem Deformationsparameter und dem Rauschparameter.

2. Verfahren gemäß Anspruch 1, bei dem
- der Deformationsparameter eine Distension einer Amplituden-Zeit-Funktion der gemessenen Eigenschwingungsspektren in einem Intervall von Schwingungsfrequenzen in Bezug auf eine Referenz-Amplituden-Zeit-Funktion von einem Referenz-Eigenschwingungsspektrum der mindestens einen Referenz-Maschinenanlage in dem Intervall von Schwingungsfrequenzen umfasst, und/oder
- der Rauschparameter eine Distension einer Amplituden-Zeit-Funktion der gemessenen Eigenschwingungsspektren in einem Intervall von Schwingungsfrequenzen in Bezug auf eine geglättete Amplituden-Zeit-Funktion der gemessenen Eigenschwingungsspektren in dem Intervall von Schwingungsfrequenzen umfasst.

3. Verfahren gemäß einem der vorhergehenden Ansprüche, bei dem
- die Erfassung des Deformationsparameters und des Rauschparameters und die Ermittlung des Maschinenzustands fortlaufend in jeweils neuen Überwachungszeitintervallen mit der Bereitstellung jedes aktuellen gemessenen Eigenschwingungsspektrums der Zeitreihe von gemessenen Eigenschwingungsspektren wiederholt werden.

4. Verfahren gemäß einem der vorhergehenden Ansprüche, bei dem die Bereitstellung jedes Eigenschwingungsspektrums der Zeitreihe der gemessenen Eigenschwingungsspektren umfasst:
- Messung von Schwingungsrohdaten mit einer Vielzahl von Schwingungssensoren, die zur Schwingungsmessung an der Maschinenanlage (200) angeordnet sind,
- Umwandlung der Schwingungsrohdaten in Schwingungsspektren der Maschinenanlage (200), wobei die Schwingungsspektren dynamisch angeregte Maschinenschwingungen und Eigenschwingungen der Maschinenanlage (200) enthalten, und
- Filterung der Schwingungsspektren, insbesondere umfassend eine Anwendung eines Kalman-Filters auf die Schwingungsspektren, zur Beseitigung der dynamisch angeregten Maschinenschwingungen, wobei die gemessenen Eigenschwingungsspektren erhalten werden.

5. Verfahren gemäß einem der Ansprüche 1 bis 3, bei dem die Bereitstellung jedes Eigenschwingungsspektrums der Zeitreihe der gemessenen Eigenschwingungsspektren umfasst:
- Messung von Schwingungsrohdaten mit einer Vielzahl von Schwingungssensoren, die zur Schwingungsmessung an der Maschinenanlage (200) angeordnet sind, während die Maschinenanlage (200) in einem Zustand ohne dynamisch angeregte Maschinenschwingungen ist, und
- Umwandlung der Schwingungsrohdaten in Schwingungsspektren der Maschinenanlage (200), wobei die Schwingungsspektren die gemessenen Eigenschwingungsspektren bilden.

6. Verfahren gemäß Anspruch 5, mit dem Schritt
- Filterung der Schwingungsspektren, die eine Anwendung eines Kalman-Filters auf die Schwingungsspektren umfasst.

7. Verfahren gemäß einem der vorhergehenden Ansprüche, mit dem Schritt
- Ermittlung eines mehrdimensionalen Bewertungsparameters aus dem Deformationsparameter und dem Rauschparameter, wobei der Maschinenzustand aus dem mehrdimensionalen Bewertungsparameter ermittelt wird.

8. Verfahren gemäß Anspruch 7, bei dem der mehrdimensionale Bewertungsparameter umfasst:
- eine Position des Deformationsparameters und des Rauschparameters, die zu einem gemeinsamen Überwachungszeitintervall erfasst sind, in einem mindestens zweidimensionalen Bewertungsfeld, und/oder
- ein mindestens zweidimensionales Funktional des Deformationsparameters und des Rauschparameters, die zu einer gemeinsamen Überwachungszeit erfasst sind.

9. Verfahren gemäß einem der Ansprüche 7 oder 8, bei dem die Ermittlung des Maschinenzustands umfasst
- Klassifizierung des Bewertungsparameters durch einen Vergleich mit vorbestimmten Parameterbereichen, und
- Ausgabe des Maschinenzustands in Abhängigkeit vom Ergebnis der Klassifizierung.

10. Überwachungsvorrichtung (100), die zur Überwachung eines Maschinenzustands einer Maschinenanlage (200), insbesondere einer Windkraftanlage, eingerichtet ist, umfassend
- eine Messeinrichtung (10), die zur Bereitstellung einer Zeitreihe von gemessenen Eigenschwingungsspektren der Maschinenanlage (200) eingerichtet ist,
- eine Analyseeinrichtung (30), die zur Erfassung eines Deformationsparameters, der für eine Abweichung der gemessenen Eigenschwingungsspektren von mindestens einem Referenz-Eigenschwingungsspektrum mindestens einer Referenz-Maschinenanlage (200) charakteristisch ist, in mindestens einem Überwachungszeitintervall und zur Erfassung eines Rauschparameters, der für ein Rauschen der gemessenen Eigenschwingungsspektren charakteristisch ist, in dem mindestens einen Überwachungszeitintervall eingerichtet ist, und
- eine Bewertungseinrichtung (50), die zur Ermittlung des Maschinenzustands aus dem Deformationsparameter und dem Rauschparameter eingerichtet ist.

11. Überwachungsvorrichtung gemäß Anspruch 10, bei der
- die Analyseeinrichtung (30) eingerichtet ist, als den Deformationsparameter eine Distension einer Amplituden-Zeit-Funktion der gemessenen Eigenschwingungsspektren in einem Intervall von Schwingungsfrequenzen in Bezug auf eine Referenz-Amplituden-Zeit-Funktion der Referenz-Eigenschwingungsspektren der mindestens einen Referenz-Maschinenanlage (200) in dem Intervall von Schwingungsfrequenzen zu erfassen, und/oder
- die Analyseeinrichtung (30) eingerichtet ist, als den Rauschparameter eine Distension einer Amplituden-Zeit-Funktion der gemessenen Eigenschwingungsspektren in einem Intervall von Schwingungsfrequenzen von einer geglätteten Amplituden-Zeit-Funktion der gemessenen Eigenschwingungsspektren in dem Intervall von Schwingungsfrequenzen zu erfassen.

12. Überwachungsvorrichtung gemäß einem der Ansprüche 10 bis 11, bei dem
- die Analyseeinrichtung (30) eingerichtet ist, die Erfassung des Deformationsparameters und des Rauschparameters und die Ermittlung des Maschinenzustands fortlaufend in jeweils neuen Überwachungszeitintervallen mit der Bereitstellung jedes aktuellen gemessenen Eigenschwingungsspektrums der Zeitreihe von gemessenen Eigenschwingungsspektren zu wiederholen.

13. Überwachungsvorrichtung gemäß einem der Ansprüche 10 bis 12, umfassend
- eine Vielzahl von Schwingungssensoren der Messeinrichtung (10), die zur Messung von Schwingungsrohdaten an der Maschinenanlage (200) angeordnet sind,
- eine Konvertierungseinrichtung (20), die zur Umwandlung der Schwingungsrohdaten in ein Schwingungsspektrum der Maschinenanlage (200) eingerichtet ist, wobei das Schwingungsspektrum dynamisch angeregte Maschinenschwingungen und Eigenschwingungen der Maschinenanlage (200) enthält, und
- eine Filtereinrichtung (30), die zur Filterung des Schwingungsspektrums, insbesondere zur Filterung des Schwingungsspektrums durch eine Anwendung eines Kalman-Filters auf das Schwingungsspektrum, zur Beseitigung der dynamisch angeregten Maschinenschwingungen eingerichtet ist, wobei das gemessene Eigenschwingungsspektrum erhalten wird.

14. Überwachungsvorrichtung gemäß einem der Ansprüche 10 bis 13, umfassend:
- eine Vielzahl von Schwingungssensoren, die zur Messung von Schwingungsrohdaten an der Maschinenanlage (200) angeordnet sind, während die Maschinenanlage (200) in einem Zustand ohne dynamisch angeregte Maschinenschwingungen ist, und
- eine Konvertierungseinrichtung (20), die zur Umwandlung der Schwingungsrohdaten in ein Schwingungsspektrum der Maschinenanlage (200) eingerichtet ist, wobei das Schwingungsspektrum das gemessene Eigenschwingungsspektrum bildet.

15. Überwachungsvorrichtung gemäß Anspruch 14, umfassend
- eine Filtereinrichtung (30), die zur Filterung des Schwingungsspektrums durch eine Anwendung eines Kalman-Filters auf das Schwingungsspektrum eingerichtet ist.

16. Überwachungsvorrichtung gemäß einem der Ansprüche 10 bis 15, umfassend
- eine Bewertungseinrichtung (50), die zur Ermittlung eines mehrdimensionalen Bewertungsparameters aus dem Deformationsparameter und dem Rauschparameter und zur Ermittlung des Maschinenzustands aus dem Bewertungsparameter eingerichtet ist.

17. Überwachungsvorrichtung gemäß Anspruch 16, umfassend
- eine Klassifizierungseinrichtung (60), die zur Klassifizierung des Bewertungsparameters durch einen Vergleich mit vorbestimmten Parameterbereichen eingerichtet ist, und
- eine Ausgabeeinrichtung (70), die zur Ausgabe des Maschinenzustands in Abhängigkeit vom Ergebnis der Klassifizierung eingerichtet ist.

18. Überwachungsvorrichtung gemäß einem der Ansprüche 10 bis 17, die umfasst
- speicher-programmierbare Steuereinheiten,
- programmierbare logische Controller, und/oder
- eine FGPA-Einheit.

19. Vorrichtung zur Datenverarbeitung, umfassend eine Computereinrichtung, die zur Ausführung des Verfahrens gemäß einem der Ansprüche 1 bis 9 konfiguriert ist.

20. Computerprogrammprodukt, umfassend Befehle, die bei der Ausführung des Programms durch einen Computer diesen veranlassen, das Verfahren gemäß einem der Ansprüche 1 bis 9 auszuführen.
